## Europäisches Patentamt
## European Patent Office
## Office européen des brevets

(11) Veröffentlichungsnummer: **0 417 278 A1**

(12)
# EUROPÄISCHE PATENTANMELDUNG
## veröffentlicht nach Art. 158 Abs. 3 EPÜ

(21) Anmeldenummer: 88906219.6

(22) Anmeldetag: 29.03.88

(86) Internationale Anmeldenummer:
PCT/SU88/00072

(87) Internationale Veröffentlichungsnummer:
WO 89/08984 (05.10.89 89/24)

(51) Int. Cl.5: **A22C 25/14, A22C 25/08**

---

(43) Veröffentlichungstag der Anmeldung:
**20.03.91 Patentblatt 91/12**

(84) Benannte Vertragsstaaten:
**DE FR SE**

(71) Anmelder: **GOSUDARSTVENNY PROEKTNO-KONSTRUKTORSKY INSTITUT RYBOPROMYSLOVOGO FLOTA "GIPRORYBFLOT"**
**ul. Gogolya, 18-20**
**Leningrad, 190000(SU)**

(72) Erfinder: **SHKARIN, Alexandr Sergeevich**
**ul. Ziny Portnovoi, 17-3-26**
**Leningrad, 198207(SU)**
Erfinder: **ELAGIN, Vladimir Nikolaevich**
**ul. Nakhimova, 3-1-31**
**Leningrad, 199266(SU)**

Erfinder: **IVANOV, Evgeny Petrovich**
**ul. Kostjushko, 54-12**
**Leningrad, 196240(SU)**
Erfinder: **VDOVICHENKO, Vyacheslav Ignatievich**
**ul. Korablestroitelei, 22-1-263**
**Leningrad, 199266(SU)**
Erfinder: **ZAVIDOVSKY, Vladimir Mikhailovich**
**pr. Maklina, 51-6**
**Leningrad, 190008(SU)**
Erfinder: **MAKHNOVSKY, Anatoly Andreevich**
**ul. Sportivnaya, 7-1 Stavropolsky krai**
**Pyatigorsk, 357528(SU)**

(74) Vertreter: **Finck, Dieter et al**
**Patentanwälte v. Füner, Ebbinghaus, Finck**
**Mariahilfplatz 2 & 3**
**W-8000 München 90(DE)**

---

(54) **VORRICHTUNG ZUM SCHNEIDEN UND KONSERVIEREN KLEINER FISCHE.**

(57) Die Anlage enthält einen technologischen Förderer I mit Kassetten 2 für die Fische, die durch Trennwände 6 in Zellen 5 unterteilt sind. In Laufrichtung des Förderers I sind Mittel 9, 10, 11 für das Bearbeiten der Fische angeordnet. Zum Ausgang des Förderers 1 führt eine Schurre 18 zur Förderung leerer Dosen. Über dem Förderer 1 ist ein zusätzlicher Forderer 14 angeordnet, der Niederhaltdeckel 16 trägt, von deden ein Teil, der sich am Untertrum 17 des Förderers befindet, über den Zellen 5 liegt. Die Deckel 16 sind mit einer Teilung angeordnet, die der Teilung der Kassetten 2 auf dem Förderer 1 gleich ist. Über dem Förderer 1 sind auf dem Abschnitt 19, wo die Kassetten 2 um das Kettenrad 20 laufen, krummlinige Niederhaltplatten 21 angeordnet. Die Förderer 1 und 14 sind miteinander kinematisch verbunden. Die Anlage enthält eine Abnahmeeinrichtung 23 zum Umpacken der Fische aus den Kassetten in die Dosen.

FIG. 2

# ANLAGE FÜR DAS BEARBEITEN UND DAS PACKEN KLEINER FISCHE IN DOSEN

Gebiet der Technik

Die Erfindung bezieht sich auf die fischverarbeitende Industrie und betrifft insbesondere Anlagen für das Bearbeiten und das Packen kleiner Fische in rechteckige Dosen und kann vorzugsweise in Produktionslinien zur Herstellung von Fischkonserven des Typs "Ölsprotten" bzw. Ölsardinen" verwendet werden, wo die Fische in die Dosen in zwei und mehr Lagen gepackt sind.

Vorhergehender Stand der Technik

In der letzten Zeit hat infolge gewisser Erschöpfung der komoerziellen Fischvorkommen eine wesentliche Änderung der Fischarten und der Fischgrößen stattgefunden, die zur Konservenherstellung verwendet werden. Der Hauptteil des Fanges besteht jetzt aus kleinen Fischen. Aus diesem Grunde ist das Problem der Bearbeitung kleiner Fische aktuell geworden. Üblicherweise werden Konserven auf spezialisierten Produktionslinien erzeugt, zu denen Einrichtungen für die Bearbeitung der Fische und das Packen der Fische in Dosen gehören. Üblicherweise umfassen diese Einrichtungen einen technologischen Förderer mit Kassetten für die Fische, die in Zellen unterteilt sind, und in Laufrichtung des technologischen Förderers angeordnete Einrichtungen für das Bearbeiten der Fische (Messer für das Kopf- und Schwanzabtrennen, Vakuumköpfe zum ausnehmen der Fische und andere Einrichtungen). Da am Austritt aus den technologischen Förderer die Fische aus jeder Kassette in eine separate Dose umgepackt werden, entspricht die Anordnung der Fischpackung in der Kassette der Fischpackung in der Dose. Gewöhnlich werden beim Packen der Fische in einer Lage jeder einzelne Fisch bzw. jedes Paar Fische, die einander entgegengesetzt orientiert sind, zuverlässig von den Wandungen der Kassettenzellen fixiert. Aber bei der Herstellung der Konserven aus kleinen Fischen reicht eine Lage für das Einfüllen der erforderlichen Fischmenge in die Dose nicht aus. Bein Packen der Fische in zwei und mehr Lagen wird die obere dieser Lagen in der Kassette nicht zuverläs sig genug fixiert, wodurch Störungen der Fischorientierung in den oberen Lagen und das Herausfallen der Fische aus der Kassette unter Einwirkung der Kraftwirkung seitens der Messer und der anderen Einrichtungen für die Bearbeitung der Fische verursacht werden.

Es ist eine Anlage für das Bearbeiten und das Packen der Fische in Dosen bekannt ("Spravochnik po tekhnologicheskomu oborudovaniju ryboobrabatyvajuschikh proizvodstv", A.A.Romanov und andere, 1979, Band I, Seite 86), mit zwei parallel angeordneten technologischen Förderern mit Kassetten für Fische, in Laufrichtung der technologischen Förderer angeordneten Scheibenmessern zum Abtrennen der Fischköpfe- und schwänze, Vakuumköpfen zum Ausnehmen der Fische und einer Fischwascheinrichtung. Die Ausgänge beider technologischen Förderer sind mit einem Mittel für das Erzeugen der Fischeinwaagen verbunden. Die Anlage weist auch eine Schurre zur Förderung leerer Dosen und eine Abnahmeeinrichtung zum Umpakken der Fische in die Dosen mit einem Mittel für das Erzeugen der Fischeinwaagen auf.

Das Vorhandensein eines mittels zur Erzeugung der Fischenwaagen in einer sclchen Einrichtung kompliziert ihren Aufbau und beeinträchtigt ihre Betriebszuverlässigkeit. Außer dem ist in einer solchen Einrichtung die Erzeugung der erforderlichen Fischeinwaagen nur aus verhältnismäßig großen Fischen in einem engen Bereich der Fischabmessungen möglich.

Es ist eine Anlage für das Bearbeiten und das Packen kleiner Fische in Dosen bekannt, die einen technologischen Förderer mit Kassetten für Fische enthält. Eine jede Kassette weist eine Grundplatte und quer zur Längsachse des Förderers verlaufende Seitenwände auf und ist durch quer zur besagten Achse verlaufende Trennwände in Zellen unterteilt.

Die querverlaufenden Seiten- und Trennwände der Kassetten weisen senkrechte Schlitze auf, die an den oberen Kanten dieser Wände offen stehen, sich über die volle Tiefe der Kassette erstrecken und in gleicher Richtung mit der Längsachse des Förderers verlaufen. In Laufrichtung des technologischen Förderers sind Scheibenmesser zum Abtrennen der Fischköpfe-und schwänze, Vakuumköpfe zum Ausnehmen der Fische und eine Fischwascheinrichtung angeordnet. Zum Ausgang des technologischen Förderers führt eine Schurre für die Zufuhr leerer Dosen.

Die Anlage enthält auch eine Abnahmeeinrichtung zum Umpacken der Fische aus den Kassetten in die Dosen, die mit den Kassetten in der Zone zusammenwirkt, wo die Kassetten um das Kettenrad laufen. Die Abnahmeeinrichtung ist in Form von krummlinigen Platten ausgeführt, die in die Kassettenschlitze an der Kassettengrundplatte eingreifen, wenn sich diese Kassetten in der Zone der besagten Zusammenwirkung befinden. Die krummlinigen Platten dehnen sich in Laufrichtung des technologischen Förderers und sind derart angeordnet, daß der Abstand zwischen ihnen und den Grundplatten der Kassetten in Richtung von der besagten Zone der Zusammenwirkung wächst. (SU, A, 192379).

Bei der Bearbeitung kleiner Fische in einer solchen Anlage, die in die Kassetten in zwei und mehr Lagen gepackt sind, kommt es aber vor, daß die Orientierung der Fische in den oberen Lagen gestört wird und die Fische aus den Kassetten herausfallen. Auch auf dem Abschnitt, wo die Kassetten um das Kettenrad des technologischen Förderers laufen, der vor der Zone des Zusammenwirkens der Abnahmeeinrichtung mit den Kassetten für die Fische liegt, kommt es vor, daß die Orientierung der Fische in den oberen Lagen gestört wird und die Fische aus der Kassette infolge der geneigten Lage der Kassetten auf diesem Abschnitt herausfallen.

Die Störung der Orientierung der Fische in den oberen Lagen und das Herausfallen der Fische aus den Kassetten beeinträchtigt die Qualität der Pakkung der Fische in die Dosen und verursachen zusätzliche Arbeitsaufwände bei dem Bearbeiten und dem Packen kleiner Fische in Dosen für die Korrektur der Lage der Fische und ihrer Zahl in den Dosen von Hand.

Offenbarung der Erfindung

Der Erfindung liegt die Aufgabe zugrunde, eine Anlage für das Bearbeiten kleiner Fische, die in Kassetten in zwei und mehr Lagen gepackt sind, und für das Umpacken dieser Fische aus den Kassetten in Dosen zu schaffen, die zusätzlich solche Mittel enthält und diese Mittel derart ausgeführt und auf eine solche Art und Weise mit den Kassetten für die Fische verbunden sind, daß beim Bearbeiten der Fische und beim Packen der Fische in Dosen Störungen der Fischorientierung und ein Herausfallen der Fische aus den Kassetten ausgeschlossen werden und folglich die Qualität des Packens der Fische in die Dosen erhöht und die Arbeitsaufwände bei dem Bearbeiten und dem Packen kleiner Fische in Dosen für die manuelle Korrektur der Lage und der Zahl der Fische in den Kassetten reduziert werden.

Diese Aufgabe wird ausgehend von einer bekannten Anlage für das bearbeiten und das Packen kleiner Fische in Dosen, mit einem technologischen Förderer mit Kassetten für Fische, von denen jede eine Grundplatte und quer zur Längsachse des Förderers verlaufende Seitenwände aufweist und durch quer zur besagten Achse verlaufende Trennwände in Zellen unterteilt ist, mit den in Laufrichtung des technologischen Förderers angeordneten: Messern zum Abtrennen der Fischköpfe-und schwänze, Vakuumköpfen zum Ausnehmen der Fische und einer Fischwascheinrichtung, mit einer Schurre für die Zufuhr leerer Dosen zum Ausgang des technologischen Förderers und mit einer Abnahmeeinrichtung zum Umpacken der Fische aus den Kassetten in die Dosen, die mit den Kassetten in der Zone zusammenwirkt, welche auf dem Abschnitt liegt, wo die Kassetten um das Kettenrad laufen, erfindungsgemäß dadurch gelöst, daß über dem geradlinigen Abschnitt des technologischen Förderers, parallel zu ihm ein zusätzlicher Förderer angeordnet ist, an dessen tragendem Organ mit einer Teilung, die der Teilung der Kassetten auf dem technologiscrien Förderer gleich ist, Niederhaltdeckel angeordnet sind, deren ein Teil der am Untertrum des tragenden Organs angeordnet ist, über den besagten Zellen liegt, und daß über dem technologischen Förderer auf dem Abschnitt, wo die Kassetten um das Kettenrad laufen, bis zur Zone der Zusammenwirkung der Abnahmeeinrichtung mit den Kassetten äquidistant mit den Kassetten mindestens eine, sich in Richtung der Längsachse des technologischen Förderers dehnende, krummlinige Niederhaltplatte angeordnet ist, wobei der technologische und der zusätzliche Förderer kinematisch miteinander verbunden sind.

Die Anordnung eines zusätzlichen Förderers mit an seinem tragenden Organ angeordneten Niederhaltdeckel mit einer mit einer Teilung, die der Teilung der Kassetten auf den technologischen Förderer gleich ist, deren ein Teil, der am Untertrum des tragenden Organ angeordnet ist, über den Zellen liegt, über den geradlinigen Abschnitt des technologischen Förderers und parallel zu ihm, und das Vorhandensein einer kinematischen Verbindung zwischen diesen Förderern gewährleistet während des Bearbeitens der Fische bei ihrer Bewegung auf dem geradlinigen Abschnitt des technologischen Förderers ein zuverlässiges Fixieren sämtlicher Fischlagen in der Kassette mittels der Niederhaltdeckel und schließt folglich die Störung der Orientierung der Fische in den Kassetten und das Herausfallen der Fische aus den Kassetten aus.

Die Anordnung ausgedehnter krummliniger Niederhaltplatten äquidistant zu den Kassetten über dem technologischen Förderer auf dem Abschnitt, wo die Kassetten um das Kettenrad laufen, bis zur Zone der Zusammenwirkung der Abnahmeeinrichtung mit den Kassetten, in Richtung der Längsachse des technologischen Förderers gewährleistet auf den besagten Abschnitt, auf welchen sich die Kassetten in geneigter Lage befinden, eine zuverlässige Fixierung sämtlicher Fischlagen mittels der besagten krummlinigen Niederhaltplatten und schließt folglich eine jeweilige Störung der Orientierung der Fische und das Herausfallen der Fische aus den Kassetten aus.

Das Aufrechterhalten der Orientierung der Fische in den Kassetten und das Verhindern des Herausfallens der Fische aus den Kassetten bei der Bearbeitung der Fische und während der Zeitspanne, wenn sich die Kassetten in geneigter Lage befinden, das heißt auf dem gesamten Transportweg der Fische bis zum Packen in die Dosen, verbessert wiederum die Qualität des Packens der Fische in die Dosen und reduziert die Arbeitsaufwende für die Korrektur der Lage und der Zahl der Fische in den Kassetten von Hand.

Es ist zweckmäßig, daß die Höhe der Trennwände kleiner ist als die Höhe der querverlaufenden Kassettenseitenwände, daß die Niederhaltdeckel in die Kassetten eintauchen und daß der technologische und der zusätzliche Förderer kinematisch miteinander über die besagten querverlaufenden Seitenwände und die besagten Niederhaltdeckel verbunden sind, wobei die querverlaufenden Kassettenseitenwände an sich bekannte, an den Oberkanten offene senkrechte Schlitze aufweisen, deren Zahl in jeder der besagten Wände der Zahl der krummlinigen Niederhaltplatten entspricht, und die besagten Niederhaltplatten in die besagten Schlitze eingreifen.

Das angeführte Höhenverhältnis der Kassettenseitenwände und der Niederhaltdeckel, sowie der Umstand, daß die Deckel in die Kassetten eintauchen, bieten infolge des gegenseitigen Eingriffs der besagten Wände und Deckel während der Arbeit der Anlage die Möglichkeit, die konstruktionsgemäß einfachste kinematische Verbindung zwischen den Förderern zu gewährleisten, da zum Aufbau dieser kinematischen Verbindung kein besonderes Triebwerk erforderlich ist. Da bei dieser Konstruktion vorausgesetzt wird, daß die Fische in den Kassetten unter der Höhe der Oberkanten der querverlaufenden Seitenwände liegen, ermöglicht das Vorhandensein der besagten Schlitze in diesen Wänden und die Anordnung der Niederhaltplatten in diesen Schlitzen die Gewährleistung einer zuverlässigen Fixierung der Fische auf dem Abschnitt, wo die Kassetten um das Kettenrad laufen.

Es ist zweckmäßig, daß jeder Vakuumkopf für das Ausnehmen der Fische mit einer zylindrischen Hülle umfaßt wird, die senkrecht mit der Möglichkeit angeordnet ist, um ihre Achse in der Richtung sich zu drehen, bei welcher der Lineargeschwindigkeitsvektor der dem technologischen Förderer am nächsten liegenden Mantellinie dieser zylindrischen Hülle in Laufrichtung des Förderers weist, wobei die besagte zylindri sche Hülle waagerechte Schlitze besitzt, die in mehreren Reihen angeordnet sind und sich gegenseitig auf dem Kreisumfang der Hülle überdecken.

Die Erfinder haben festgestellt, daß die maximale Saugkraft des Vakuumkopfs in 1 bis 2 mm Abstand von ihm entsteht, wobei der jeweilige konkrete Abstand durch das von dem Saugkopf erzeugte Vakuum bestimmt wird. Das Vorhandensein einer senkrechten zylindrischen Hülle, die die Schlitze aufweist und den Vakuumkopf umfaßt, ermöglicht durch eine entsprechende Anpassung der Hüllendicke die Gewährleistung eines konstanten optimalen Abstands zwischen den Vakuumkopf und den Fischen und hierdurch die Nutzung der maximalen Saugkraft des Saugkopfs und damit die Erhöhung der Effektivität beim Ausnehmen der Fische. Die Anordnung der zylindrischen Hülle mit der Möglichkeit der Drehung um ihre Längsachse in der Richtung, bei welcher der Lineargeschwindigkeitsvektor der zum technologischen Förderer nächsten Mantellinie dieser zylindrischen Hülle in Laufrichtung des Förderers weist, ermöglicht durch eine entsprechende Anpassung der Drehfrequenz der zylindrischen Hülle die Verleihung einer linearen Geschwindigkeit der besagten Mantellinie, die der Bewegungsgeschwindigkeit der Fische auf dem Förderer gleich ist. Die Gleichheit dieser Geschwindigkeiten schließt wiederum die Wirkung der Reibungskräfte aus und gewährleistet somit das Ausnehmen der Fische bei ihrer Ruhelage in bezug auf die Hülle, d.h. in einem Zustand, wenn das Ausnehmen am effektivsten verläuft.

Die Ausführung der Schlitze in der Hülle waagerecht, in mehrreihiger Anordnung und sich gegenseitig auf dem Kreisumfang der Hülle überdeckend, schließt aus, daß der Vakuumkopf von den Stegen der zylindrischen Hülle, die auf dein Kreisumfang der Hülle zwischen den Schlitzen angeordnet sind, periodisch vollständig abgedeckt wird.

Es ist zweckmäßig, in Laufrichtung des technologischen Förderes nach der Fischwascheinrichtung unter den Kassettengrundplatten eine Vakuumkammer zum Entfernen der Feuchtigkeit aus den Kassetten anzuordnen und die Kassettengrundplatten perforiert auszuführen.

Eine solche Bauart ermöglicht die Entfernung des überschüssigen Waschwassers, das durch Kräfte der Oberflächenspannung zwischen den Fischen und auch zwischen den Fischen und den Kassettentrennwänden nach dem Fischwaschen zurückgehalten wird, aus den Kassetten. Das Entfernen des überschüssigen Waschwassers fördert die Steigerung der Konservenqualität, da das überschüssige Wasser zusammen mit Eiweißstoffrückständen das Einstehen eines schmutzig aussehenden Absatzes in den Konserven verursacht bzw. zusätzliche Energieaufwände für das Verdampfen des Wrasserüberschusses bis auf einen zulässigen Betrag erforderlich werden.

Kurze Beschreibung der Zeichnungen

Anhand der Zeichnungen wird die Erfindung beispielsweise näher erläutert. Es zeigen.

Fig.1     schematisch eine Draufsicht auf eine erfindungsgemäse Anlage für das Bearbeiten und das Packen kleiner Fische in Dosen,

Fig.2     schematisch die Anlage in Längsschnitt,

Fig.3     eine Draufsicht auf eine Kassette in vergrößertem Maßstab,

Fig.4     einen Schnitt nach der Linie IV-IV in Fig.3 in vergrößertem Maßstab,

Fig.5     einen Saugkopf im Schnitt in vergrößertem Maßstab und

Fig.6     eine Abwicklung eines Abschnitts einer zylindrischen Hülle.

Beste Ausführungsvariante der Erfindung

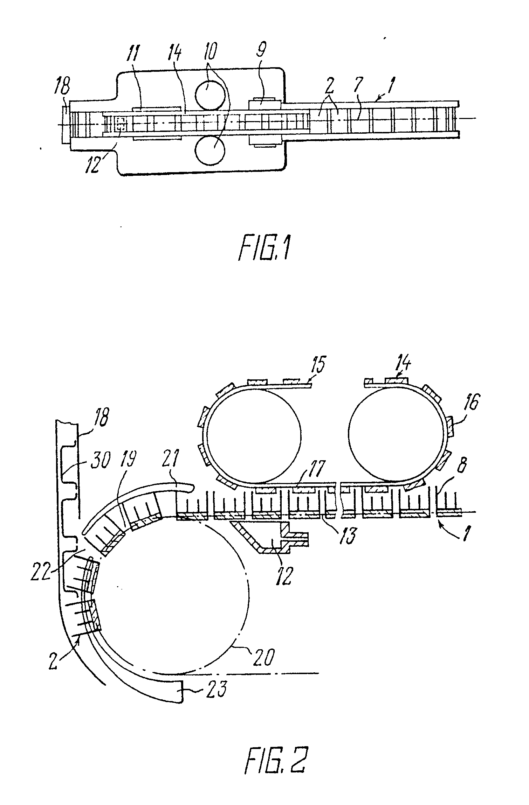

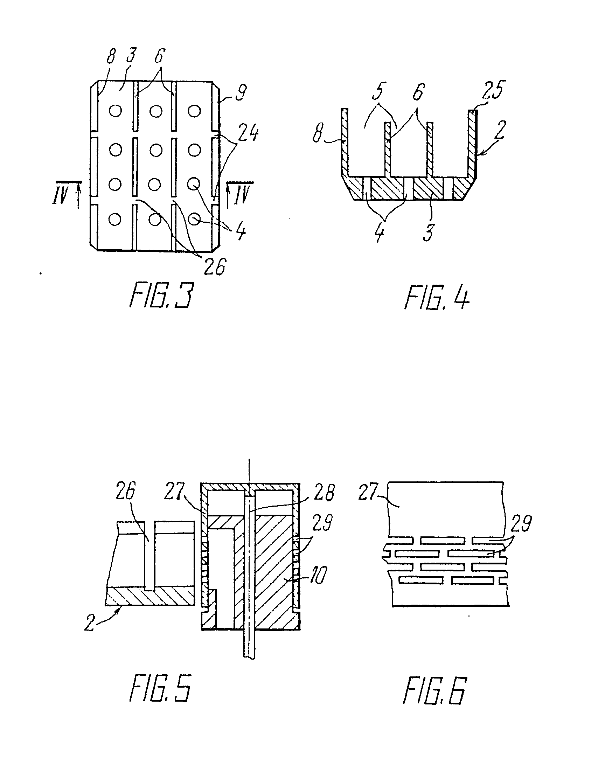

Die Anlage enthält einen technologischen Förderer I (Fig.1), der Kassetten 2 für Fische aufweist, die miteinander an den Grundplatten 3 (Fig.4) durch Gelenke (in den Figuren nicht dargestellt, um die Zeichnungen nicht zu komplizieren) verbunden sind. Die Grundplatten 3 der Kassetten weisen eine Perforation 4 'auf. Jede Kassette 2 ist in Zellen 5 durch Trennwände 6 unterteilt, welche auf der Kassettengrundplatte 3 befestigt und parallel zu den quer in bezug auf die Längsachse 7 (Fig.1) des Förderers 1 verlaufenden Seitenwänden 8 (Fig.4) der Kassetten 2 angeordnet sind. Die Höhe der Trennwände 6 ist kleiner als die Höhe der Seitenwände 8. Es sind Ausführungsvarianten der Anlage möglich, in welchen die Höhe der besagten Trennwände der Höhe der Seitenwände der Kassetten gleich ist. In Laufrichtung des technologischen Förderers 1 (Fig.1) sind an seinen beiden Bordseiten Scheibenmesser 9 zum Abtrennen der Fischköpfe und schwänze, Vakuumköpfe 10 zum Ausnehmen der Fische und Fischwascheinrichtungen 11 angeordnet. Nach der Fischwascheinrichtung 11 ist unter den Grundplatten 3 (Fig.4) der Kassetten 2 eine Vakuumkammer 12 (Fig.2) zum Entfernen der Feuchtigkeit aus den Kassetten angeordnet.

Es ist eine Ausrührungsvariante der Anlage ohne Vakuumkammer 12 möglich. Über dem geradlinigen Abschnitt 13 des technologischen Förderers 1 ist ein zusätzlicher Förderer 14 angeordnet, auf dessen tragenden Organ 15 mit einer Teilung, die der Teilung der Kassetten 2 auf dem technologischen Förderer 1 gleich ist, Niederhaltdeckel 16 befestigt sind. Jeder der Deckel 16, der sich an Untertrum 17 des tragenden Organs 15 befindet, liegt über den Zellen der entsprechenden Kassette 2 und taucht in diese Kassette ein. Die Höhenlage der Deckel 16 in der Anlage ist derart gewählt, daß optimale Niederhaltkräfte für die Fische in den Kassetten 2 erreicht werden, die einerseits ein zuverlässiges Fixieren der Fische und andererseits die Unversehrtheit dieser Fische gewährleisten. Der technologische Förderer 1 und der zusätzliche Förderer 14 sind über die Wände 8 der Kassetten 2 und die Niederhaltdeckel 16 kinematisch miteinander verbunden.

Bei der Ausführungsvariante der Anlage, wenn die Höhe der Trennwände der Höhe der querverlaufenden Seitenwände der Kassetten gleich ist, und folglich die Niederhaltdeckel über der Ebene der Kassetten liegen, sind der technologische und der zusätzliche Förderer miteinander durch ein separates Triebwerk verbunden (in den Figuren nicht dargestellt, um die Zeichnungen nicht zu komplizieren). Zum Ausgang des technologischen Förderers 1 (Fig.1) führt eine Schurre 18 für die Zufuhr leerer Dosen. Über dem technologischen Förderer 1 sind auf einem Abschnitt 19 (Fig.2), wo die Kassetten 2 um ein Kettenrad 20 laufen, äguidistant mit den Kassetten 2 in Richtung der Längsachse 7 (Fig.1) des technologischen Förderers 1 ausgedehnte krummlinige Niederhaltplatten 21 (Fig.2) angeordnet. Die Niederhaltplatten 21 erstrecken sich bis zur Zone 22 der Zusammenwirkung einer Abnahmeeinrichtung 23 für das Umpacken der Fische aus den Kassetten in die Dosen mit den Kassetten 2 und greifen in senkrechte Schlitze 24 (Fig.3) in den Wänden 8 der Kassetten 2 ein, die an den oberen Kanten 25 (Fig.4) der besagten Kassetten offen stehen. Die Zahl der Schlitze 24 (Fig.3) in jeder der Wände 8 entspricht der Zahl der Niederhaltplatten 21 (Fig.2). Die Zahl der Niederhaltplatten 21 wird wiederum ausgehend von der Bedingung gewählt, daß eine bestmögliche Fixierung der Fische in den Kassetten gewährleistet wird, und auf Grund konstruktiver Überlegungen.

Bei der Ausführungsvariante der Anlage, wenn die Höhe der besagten Trennwände der Höhe der querverlaufenden Wände der Kassetten gleich ist, liegen die Niederhaltplatten 21 über den Kassetten 2. Die Abnahmeeinrichtung 23 ist in Form von Platten ausgeführt, die in der Zone 22 an den Grundplatten der Kassetten in die senkrechten Schlitze 24 (Fig.3) in den Wänden 8 der Kassetten 2 und in senkrechte Schlitze 26, die in den Trennwänden 6 ausgeführt sind, eingreifen. Die besagten Platten dehnen sich in Laufrichtung des technologischen Förderers und sind derart angeordnet, daß der Abstand zwischen ihnen und den Grundplatten der Kassetten sich in Richtung von der erwähnten Zone 22 (Fig.2) vergrößert. Es sind auch andere bekannte Ausführungsformen der Konstruktion der Abnahmeeinrichtung 23 möglich. Jeder Vakuumkopf 10 (Fig. 1) für das Ausnehmen der Fische wird von einer zylindrischen Hülle 27 (Fig.5) umfaßt, die senkrecht angeordnet und mit einem Antrieb für ihre Drehung um ihre Längsachse 28 (in den Figuren nicht dargestellt, um die Zeichnungen nicht zu komplizieren) gekuppelt ist. Die zylindrische Hülle 27 weist auf dem gesamten Kreisumfang waagerechte Schlitze 29 auf, die in mehreren Reihen angeordnet sind. Die waagerechten Schlitze 29 der verschiedenen Reihen überdecken einander auf dem Kreisumfang der Hülle 27. Die Dicke der Hülle kann in den Grenzen von 1 bis 2 mm liegen und wird ausgehend von den Bedingungen der Nutzung der maximalen Saugkraft des Vakuumkopfs 10 gewährt.

Die Anlage funktioniert wie folgt.

Die Fische, die in die Kassetten 2 (Fig.2) in zwei bzw. mehereren Lagen nach einem der bekannten Verfahren, beispielsweise manuell bzw. mechanisch mit Hilfe von Fischorientierungsvorrichtungen (in den Figuren nicht dargestellt, um die Zeichnungen nicht zu komplizieren), gepackt worden sind, bewegen sich auf dem geradlinigen Abschnitt 13 des technologischen Förderers 1 (Fig.1), wo aufeinanderfolgend das Abtrennen der Fischköpfe- und schwänze mit Hilfe der Scheibenmesser 9, das Ausnehmen der Fische mit Hilfe des Vakuumkopfs 10, das Waschen der Fische mit Hilfe der Fischwascheinrichtung 11 und das Entfernen der Feuchtigkeit aus den Kassetten 2, die nach dem Waschen der Fische zurückgeblieben ist, über die Perforation 4 (Fig.4) der Grundplatten 3 der Kassetten mit Hilfe der Vakuumkammer 12 (Fig.2) durchgeführt wird. Die den Vakuumkopf 10 unfassende zylindrische Hülle 27 (Fig.5) wird durch einen Antrieb (in den Figuren nicht dargestellt, um die Zeichnungen nicht zu komplizieren) in Drehung um ihre Längsachse 28 in der Richtung gesetzt, bei der der Lineargeschwindigkeitsverktor der den technologischen Förderer 1 (Fig.1) nächstliegenden Mantellinie dieser zylindrischen Hülle 27 (Fig.5) in Laufrichtung des technologischen Förderers 1 weist. Die zylindrische Hülle rotiert mit einer Frequenz, bei welcher die lineare Geschwindigkeit der Mantellinie dieser Hülle der Geschwindigkeit des technologischen Förderers 1 gleich ist. Die Gleichheit dieser Geschwindigkeiten ermöglicht das Ausnehmen der Fische bei relativer Ruhelage der Fische in bezug auf die Hülle 27, d.h. die Erhöhung der Effektivität des Ausnehmens.

Außerdem erhöht sich dank einer entsprechenden Wahl der optimalen Dicke der zylindrischen Hülle 27 auch die Effektivität beim Ausnehmen der Fische mittels der Nutzung der maxi malen Saugkraft des Vakuumkopfs 10. Während des Bearbeitens der Fische auf den geradlinigen Abschnitt 13 (Fig.2) des technologischen Förderers 1 werden sie zuverlässig in den Kassetten 2 mittels der Niederhaltdeckel 16 des zusätzlichen Förderers 14 fixiert, wodurch Störungen der Fischorientierung und das Herausfallen der Fische aus den Kassetten 2 unmöglich gemacht werden.

Das tragende Organ 15 des zusätzlichen Förderers 14 bewegt sich durch die Wechselwirkung zwischen den Niederhaltdeckeln 16 und den quer

verlaufenden Seitenwänden 8 der Kassetten 2. Da die Niederhaltdeckel 16 mit einer Teilung angeordnet sind, die der Teilung der Kassetten 2 gleich ist, gewährleisten die besagten Deckel das Fixieren der Fische in jeder Kassette. Auf dem Abschnitt 19, wo die Kassetten 2 um das Kettenrad 20 des technologischen Förderers 1 laufen, bis zur Zone 22 des Zusammenwirkens der Abnahmeeinrichtung 23 mit den Kassetten, also während der Zeit, wenn die Kassetten 2 mit den Fischen eine geneigte Lage aufweisen, wird die zuverlässige Fixierung der Fische mittels krummliniger Niederhaltplatten 21 durchgeführt. In der Zone 22 des Zusammenwirkens der Abnahmeeinrichtung 23 mit den Kassetten 2 greifen die Platten der Abnahmeeinrichtung an den Grundplatten 3 (Fig.3) der zugeführten Kassetten in die senkrechten Schlitze 24 in den Wänden 8 der Kassetten und in die Schlitze 26 in den Trennwänden 6 ein und stoßen die Fische in Dosen 30 (Fig. 2), die über die Schurre 18 zugeführt werden. In der Erfindung können auch andere bekannte Konstruktionen der Abnahmeeinrichtungen für das Umpacken der Fische aus den Kassetten in die Dosen verwendet werden.

Industrielle Anwendbarkeit

Am vorteilhaftesten kann die Erfindung in Produktionslinien zur Berstellung von Konserven aus kleinen Fischen, die in die Dosen in zwei und meht Lagen gepackt sind.

**Ansprüche**

1. Anlage für das Bearbeiten und das Packen kleiner Fische in Dosen, mit einem technologischen Förderer mit Kassetten für die Fische, von denen jede eine Grundplatte und quer zur Längsachse des Förderers verlaufende Seitenwände aufweist und durch quer zur besagten Achse verlaufende Trennwände in Zellen unterteilt ist, mit den in Laufrichtung des technologischen Förderers angeordneten: Messern zum Abtrennen der Fischköpfe- und schwänze, Vakuumköpfen zum Ausnehmen der Fische und einer Fischwascheinrichtung, mit einer Schurre für die Zufuhr leerer Dosen zum Ausgang des technologischen Förderers und mit einer Abnahmeeinrichtung zum Umpacken der Fische aus den Kassetten in die Dosen, die mit den Kassetten in der Zone zusammenwirkt, welche auf dem Abschnitt liegt, wo die Kassetten (2) um das Kettenrad laufen, **dadurch gekennzeichnet**, daß über dem geradlinigen Abschnitt (13) des technologischen Förderers (1) parallel zu ihm ein zusätzlicher Förderer (14) angeordnet ist, daß am tragenden Organ (15) des zusätzlichen Förderers (14) sind mit einer Teilung, die der Teilung der Kassetten (2) auf dem technologischen Förderer (1) gleich ist, Niederhaltdeckel (16) angeordnet, deren ein Teil, der sich am Untertrum (17) des tragenden Organs (15) befindet, über den besagten Zellen (5) liegt, und daß über dem technologischen Förderer (1) auf den Abschnitt (19), wo die Kassetten (2) um das Kettenrad (20) laufen, bis zur Zone (22) der Zusammenwirkung der Abnahmeeinrichtung (23) mit den Kassetten (2) äquidistand mit den Kassetten (2) mindestens eine sich in Richtung der Längsachse (7) des technologischen Förderers (1) dehnende krummlinige Niederhaltplatte (21) angeordnet ist, wobei der technologische Förderer (1) und der zusätzliche Förderer (14) miteinander kinematisch verbunden sind.

2. Anlage nach Anspruch 1, **dadurch gekennzeichnet**, daß die Höhe der besagten Trennwände (6) kleiner ist als die Höhe der querverlaufenden Seitenwände (8) der Kassetten, daß die Niederhaltdeckel (16) in die Kassetten (2) eintauchen und daß der technologische Förderer (1) und der zusätzliche Förderer (14) kinematisch miteinander über die besagten querverlaufenden Seitenwände (8) der Kassetten und die besagten Niederhaltdeckeln (16) verbunden sind, wobei die querverlaufenden Seitenwände (8) der Kassetten (2) an sich bekannte, an den Oberkanten (25) offene senkrechte Schlitze (24) aufweisen, deren Zahl in jeder der besagten Wände (8) der Zahl der krummlinigen Niederhaltplatten (21) entspricht, und die besagten Niederhaltplatten (21) in die besagten Schlitze (24) eingreifen.

3. Anlage nach einem der Ansprüche 1 und 2, **dadurch gekennzeichnet**, daß jeder Vakuumkopf (10) zum Ausnehmen der Fische mit einer zylindrischen Hülle (27) umfaßt ist, die senkrecht und mit der Möglichkeit der Drehung um ihre Längsachse (28) In der Richtung angeordnet ist, bei welcher der Lineargeschwindigkeitsvektor der dem technologischen Förderer (1) an nächsten liegenden Mantellinie dieser zylindrischen Hülle in Laufrichtung des Förderers (1) weist, wobei die besagte zylindrische Hülle (27) waagerechte Schlitze (25) hat, die in mehreren Reihen angeordnet sind und einander auf dem Kreisumfang der Hülle überdecken.

4. Anlage nach einem der Ansprüche 1 bis 3, **dadurch gekennzeichnet**, daß in Laufrichtung des technologischen Förderers (1) nach der Fischwascheinrichtung (11) unter den Grundplatten (3) der Kassetten (2) eine Vakuumkammer (12) zum Entfernen der Feuchtigkeit aus den Kassetten angeordnet ist und daß die Grundplatten (3) der Kassetten (2) perforiert ausgeführt sind.

FIG.1

FIG. 2

FIG.3

FIG. 4

FIG.5

FIG.6

# INTERNATIONAL SEARCH REPORT

**I. CLASSIFICATION OF SUBJECT MATTER** (If several classification symbols apply, indicate all) [6]

According to International Patent Classification (IPC) or to both National Classification and IPC

$IPC^4$  A22C 25/14, 25/08

**II. FIELDS SEARCHED**

| Minimum Documentation Searched [7] | |
|---|---|
| Classification System | Classification Symbols |
| $IPC^4$ | A22C 25/08, 25/14, A23B 4/00 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | SU, A1, 192379 (Nauchno-issledovatelsky i konstruktorsky institut mekhanizatsii rybnoi promyshlennosti) 29 May 1967 (29.05.67)  see the claims (cited in the description) | 1-4 |
| A | FR, A1, 2540706 (NORDISCHER MASCHINENBAU RUD BAADER GmbH + CO.KG.) 17 August 1984 (17.08.84) see figures 1-5, claim 1 | 1-4 |
| A | SU, A1, 269449 (Nauchno-issledovatelsky i konstruktorsky institut mekhanizatsii rybnoi promyshlennosti) 22 July 1970 (22.07.70) see the claims | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 16 December 1988 (16.12.88) | 28 December 1988 (28.12.88) |

| International Searching Authority | Signature of Authorized Officer |
|---|---|
| ISA/SU | |

Form PCT/ISA/210 (second sheet) (January 1985)